# EUROPEAN PATENT APPLICATION

(11) **EP 4 746 142 A1**
(43) Date of publication of application: **20.05.2026**
(21) Application number: 25203039.0
(22) Date of filing: 18.09.2025
(51) Int. Cl.: H01M 50/147, H01M 50/148, H01M 50/188, H01M 50/533, H01M 50/562, H01M 50/564, H01M 50/552, H01M 50/567, H01M 50/107, H01M 50/152, H01M 50/559

(54) **CONDUCTIVE STRUCTURE, COVER PLATE ASSEMBLY, AND BATTERY CELL**

(30) Priority: 19.11.2024 CN 202422823548 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: He, Wei, Huizhou, 516039 (CN); Zheng, Xu, Huizhou, 516039 (CN); Shu, Kuanjin, Huizhou, 516039 (CN); Yan, Bo, Huizhou, 516039 (CN); Duan, Dong, Huizhou, 516039 (CN)
(74) Representative: Nederlandsch Octrooibureau

(57) **Abstract**

The present disclosure provides a conductive structure (1), a cover plate assembly (10), and a battery cell (100). The conductive structure (1) includes a first limiting portion (11) and a second limiting portion (12) disposed on one side of the first limiting portion (11). The second limiting portion (12) includes a bendable and deformable annular rib (121). A free end (121a) of the annular rib (121) is partially recessed inward to form a first groove (1211). In a use state, the conductive structure (1) is configured to pass through a cover plate (2) and be connected to the tab (301), and at least the free end (121a) of the annular rib (121) is turned outward to form a first flange (122). The first flange (122) and the first limiting portion (11) both abut against the cover plate (2) and jointly clamp the cover plate (2).

## Description

### TECHNICAL FIELD

The present disclosure relates to the field of battery technologies, and in particular, to a conductive structure, a cover plate assembly, and a battery cell.

### BACKGROUND

In the related art, when assembling a top cover (also referred to as a cover plate assembly) of a battery, a pole is inserted into a terminal pressing block and a cover plate in a stacked configuration. Then the pole is press-riveted in an axial direction of the pole, so that the pole expands in a radial direction and is riveted with the terminal pressing block and the cover plate. Then the pole and the terminal pressing block are welded together by a welding process. This method of assembling the top cover adopts a riveting technology with a complex process, resulting in high production cost and low production efficiency of the top cover.

### SUMMARY

Embodiments of the present disclosure provide a conductive structure, a cover plate assembly, and a battery cell, so as to solve a technical problem of complex assembly of a top cover.

According to a first aspect, the embodiments of the present disclosure provide a conductive structure including a first limiting portion and a second limiting portion disposed on one side of the first limiting portion. The second limiting portion includes a bendable and deformable annular rib. A free end of the annular rib is partially recessed inward to form a first groove. In a use state, the conductive structure is configured to pass through a cover plate and be connected to a tab. At least the free end of the annular rib is turned outward to form a first flange. The first flange and the first limiting portion both abut against the cover plate and jointly clamp the cover plate.

In an embodiment, in an initial state, a wall thickness of the annular rib ranges from 0.4 mm to 1.5 mm, and/or the first limiting portion includes a limiting block protruding from the annular rib along a radial direction of the annular rib.

In an embodiment, the second limiting portion further includes an intermediate layer located between the first limiting portion and the annular rib, and the intermediate layer and the annular rib are integrally formed and enclose a second groove.

In an embodiment, in an initial state, a connection between the intermediate layer and the annular rib is formed with a rounded corner in the second groove, and a radius of the rounded corner is greater than or equal to 0.2 mm.

In an embodiment, a surface of the first limiting portion on a side away from the second limiting portion is recessed inward to form a third groove, and the third groove corresponds to the second groove.

In an embodiment, the first limiting portion is a first-metal structure, the second limiting portion is a second-metal structure, and a bonding interface between the first-metal structure and the second-metal structure includes an uneven microstructure.

In an embodiment, the first limiting portion is a terminal pressing block, the second limiting portion is a pole, and the terminal pressing block and the pole are integrally provided.

In an embodiment, the first limiting portion is a current collector, the second limiting portion is a pole, and the current collector and the pole are integrally provided.

In an embodiment, the conductive structure is a pole.

According to a second aspect, the embodiments of the present disclosure provide a cover plate assembly including a cover plate and the above-mentioned conductive structure. The cover plate is provided with a mounting through hole penetrating through the cover plate along a thickness direction of the cover plate. The conductive structure is in the use state, the conductive structure passes through the mounting through hole, the first flange and the first limiting portion abut against the cover plate, respectively, and the cover plate is clamped between the first limiting portion and the first flange.

In an embodiment, the cover plate is provided with an arc-shaped transition surface, the arc-shaped transition surface bends and extends from a side surface of the cover plate into the mounting through hole, the first flange includes an outer surface close to the cover plate, and the arc-shaped transition surface matches the outer surface.

In an embodiment, a side surface of the cover plate is partially recessed inward to form a fourth groove, the fourth groove is provided surrounding the mounting through hole, a surface of a bottom wall of the fourth groove is connected to the arc-shaped transition surface, and the first flange is accommodated in the fourth groove.

In an embodiment, the cover plate includes a cover plate body and insulating members respectively located on two opposite sides of the cover plate body. The mounting through hole includes a first through hole provided on the cover plate body and a second through hole provided on each of the insulating members. The first through hole corresponds to the second through hole. A surface of at least one of the insulating members on a side away from the cover plate body is formed with the arc-shaped transition surface and the fourth groove, and the arc-shaped transition surface at least partially extends into the second through hole.

In an embodiment, each of the insulating members is further formed with a second flange surrounding the second through hole and extending toward the cover plate body, the arc-shaped transition surface is located on the second flange, the second flange extends into the first through hole, and the second flange matches the first through hole.

In an embodiment, the cover plate assembly further includes a sealing member, the sealing member at least partially extends into the first through hole and is located between the cover plate body and the conductive structure, and a free end of the second flange abuts against the sealing member.

In an embodiment, the cover plate assembly further includes an auxiliary pressing sheet, the auxiliary pressing sheet is located between the cover plate and the first flange, the auxiliary pressing sheet includes a front surface and a back surface opposite to each other, the front surface matches the outer surface, and the back surface matches the arc-shaped transition surface.

According to a third aspect, the embodiments of the present disclosure further provide a battery cell, including:
a casing including an accommodating cavity;
an electrode assembly disposed in the accommodating cavity, where the electrode assembly includes a tab; and
the aforementioned cover plate assembly, where the cover plate assembly is connected to the casing and closes an opening of the accommodating cavity, and the conductive structure is connected to the tab.

Beneficial effects of the embodiments of the present disclosure are as follows.

In the embodiments of the present disclosure, when the conductive structure is used, pressure is applied to the annular rib, so that at least the free end of the annular rib is turned outward to form the first flange. Then the first flange and the first limiting portion are used to jointly clamp the cover plate, so that the conductive structure and the cover plate are assembled together. This method is not only simple in process, but also low in operation difficulty. In addition, the free end of the annular rib is formed with the first groove, and the first groove serves as a notch on the free end of the annular rib and is formed as a weak strength region of the annular rib. In this way, when pressure is applied to the annular rib, the free end of the annular rib is easier to expand outward by the first groove, so that the annular rib is guided to at least partially expand to form the first flange, thereby reducing the difficulty of forming the first flange, further reducing the difficulty of assembling the conductive structure and the cover plate together, and improving the assembly efficiency.

### BRIEF DESCRIPTION OF THE DRAWINGS

In order to provide clearer explanations of the technical solutions in the embodiments of the present disclosure, it is to be noted that the accompanying drawings in the following description of the embodiments are merely some of embodiments of the present disclosure, and that other accompanying drawings may be obtained by the skilled person in the art without involving creative labor.
FIG. 1 is a schematic three-dimensional structural view of a conductive structure in an initial state according to the embodiments of the present disclosure.
FIG. 2 is a schematic front-view structural view of a conductive structure in an initial state according to the embodiments of the present disclosure.
FIG. 3 is a schematic cross-sectional structural view of a conductive structure in an initial state according to the embodiments of the present disclosure.
FIG. 4 is a schematic three-dimensional structural view of a conductive structure in a use state according to the embodiments of the present disclosure.
FIG. 5 is a schematic top-view structural view of a conductive structure in a use state according to the embodiments of the present disclosure.
FIG. 6 is a cross-sectional view taken along line A-A in FIG. 5.
FIG. 7 is a schematic three-dimensional structural view of a cover plate assembly according to the embodiments of the present disclosure.
FIG. 8 is a first exploded view of a cover plate assembly according to the embodiments of the present disclosure.
FIG. 9 is a second exploded view of a cover plate assembly according to the embodiments of the present disclosure.
FIG. 10 is a schematic front-view structural view of a cover plate assembly according to the embodiments of the present disclosure.
FIG. 11 is a cross-sectional view taken along line B-B in FIG. 10.
FIG. 12 is a schematic front-view structural view of an insulating member of a cover plate assembly according to the embodiments of the present disclosure.
FIG. 13 is a cross-sectional view taken along line C-C in FIG. 12.
FIG. 14 is a schematic three-dimensional structural view of a battery cell according to the embodiments of the present disclosure.

### Reference numerals are as follows:

1, conductive structure;
11, first limiting portion; 11a, limiting block; 111, third groove;
12, second limiting portion;
121, annular rib; 121a, free end; 121b, fixed end; 1211, first groove;
122, first flange; 122a, outer surface;
123, intermediate layer;
124, second groove; 1241, rounded corner;
10, cover plate assembly;
2, cover plate; 2a, mounting through hole; 2b, arc-shaped transition surface; 2c, fourth groove;
21, cover plate body; 210, first through hole;
22, insulating member; 220, second through hole; 221, first insulating member; 222, second insulating member; 223, second flange;
3, sealing member;
4, auxiliary pressing sheet; 41, front surface; 42, back surface;
100, battery cell;
20, casing; 201, accommodating cavity;
30, electrode assembly; 301, tab.

### DETAILED DESCRIPTION

Technical solutions in embodiments of the present disclosure will be clearly and completely described below in conjunction with drawings in the embodiments of the present disclosure. The described embodiments are only a part of embodiments of the present disclosure, rather than all the embodiments. Based on the embodiments of the present disclosure, all other embodiments obtained by those skilled in the art without involving any creative labor are within the scope of the present disclosure.

Furthermore, it should be understood that the specific embodiments described herein are only for illustrating and explaining the present disclosure and are not intended to limit the present disclosure. In the application, unless otherwise specified, the directional words used such as "upper" and "lower" usually refer to the upper and lower position of the device in actual use or working state, specifically to the direction of the drawing in the drawings, while "inside" and "outside" are understood referring to the contour lines of the device.

The terms "first" and "second" are only used for descriptive purposes, and cannot be interpreted as indicating or implying the relative importance or implicitly indicating the quantity of indicated technical features. Thus, features defined by first and second may explicitly or implicitly include one or more of the features. In the description of the present disclosure, multiple means two or more, unless otherwise specifically defined.

In the description of the present disclosure, it should be understood that, unless specified or limited otherwise, the terms "connected", "coupled", and "fixed" are used broadly, and may be, for example, fixed connections, detachable connections, or integrated connections; may be mechanical connections, may also be electrical connections or communicate with each other; may also be direct connections or indirect connections via intervening structures; may also be inner communications of two elements or interaction relationships between two elements, may also be direct connections or indirect connections via intervening structures; may also be inner communications of two elements or interaction relationships between two elements. Those ordinary skilled in the art can understand the specific meanings of the above terms in the present disclosure according to specific situations.

The terms "include", "comprise", or any other variation thereof are intended to cover a non-exclusive inclusion, such that a process, method, article, or device that includes a list of elements includes not only those elements but also other elements not expressly listed, or elements inherent to such a process, method, article, or device. An element proceeded by "comprises a..." does not, without more constraints, preclude the existence of additional identical elements in the process, method, article, or device that comprises the element.

In the descriptions of the embodiments of the present disclosure, words such as "example" or "for example" are used to indicate examples, descriptions, or descriptions. Any embodiment or design scheme described as an "example" or "for example" in the embodiments of the present disclosure is not explained as being more preferred or having more advantages than another embodiment or design scheme. The use of words such as "example" or "e.g." is intended to present a relative concept in a clear manner.

For ease of understanding the solutions of the present disclosure, spline curves and arrows that are used as labels in the accompanying drawings are described herein: a component indicated by a spline curve without an arrow is a solid component, that is, a component with a solid structure; and a component indicated by a spline curve with an arrow is a phantom component, that is, a component without a solid structure.

In view of the technical problem of complex assembly of a top cover in the related art, embodiments of the present disclosure provide a conductive structure, a cover plate assembly having the conductive structure, and a battery cell having the cover plate assembly.

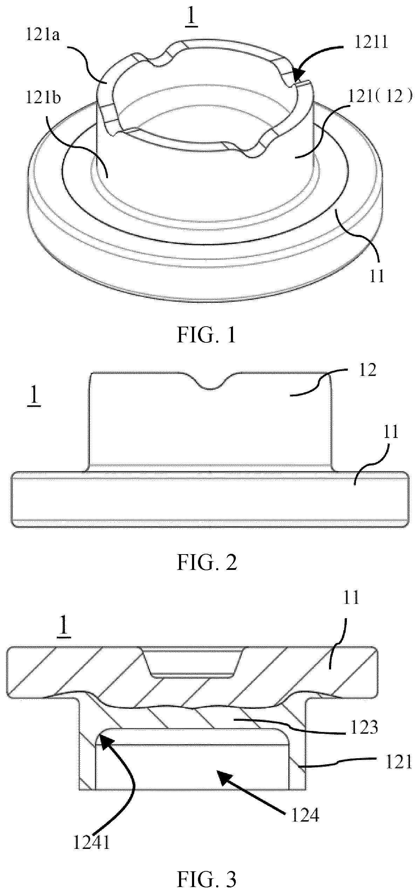

According to a first aspect, referring to FIG. 1, the embodiments of the present disclosure provide a conductive structure 1. The conductive structure 1 is used to connect an internal circuit of a battery cell to a circuit (an external circuit for short) outside the battery cell, so that the battery cell is connected to the external circuit to realize that the external circuit supplies power to the battery cell (i.e., the battery cell is charged), or the battery cell supplies power to the external circuit (i.e., the battery cell is discharged). In detail, the conductive structure 1 may be used to be assembled to a cover plate of the battery cell.

Specifically, referring to FIGs. 1 to 11, the conductive structure 1 includes a first limiting portion 11 and a second limiting portion 12. The second limiting portion 12 is disposed on one side of the first limiting portion 11. The second limiting portion 12 includes a bendable and deformable annular rib 121. The free end 121a of the annular rib 121 is partially recessed to form a first groove 1211. In a use state, the conductive structure 1 is configured to pass through the cover plate 2 and be connected to a tab 301. At least the free end 121a of the annular rib 121 is turned outward to form a first flange 122. The first flange 122 and the first limiting portion 11 both abut against the cover plate 2 and jointly clamp the cover plate 2.

The conductive structure 1 is a conductor. Optionally, the conductive structure 1 is a metal member, i.e., a material of the conductive structure 1 is metal. Metals not only have electrical conductivity but also have ductility, which facilitates the annular rib 121 to be bent and deformed easily, thereby reducing the difficulty of manufacturing the conductive structure 1. The metals herein may be metal elements or metal alloys. Since the conductive structure 1 includes the first limiting portion 11 and the second limiting portion 12, when the conductive structure 1 is the metal member, the first limiting portion 11 and the second limiting portion 12 may be made of a same metal, or may be made of different metals.

The annular rib 121 includes two opposite ends. One end of the annular rib 121 is away from the first limiting portion 11 and forms the free end 121a, and the other end of the annular rib 121 is connected to the first limiting portion 11, which may be a direct connection or an indirect connection. The other end of the annular rib 121 connected to the first limiting portion 11 is formed as a fixed end 121b.

Since the annular rib 121 may be bendable and deformable, the conductive structure 1 has an initial state and a use state, and the conductive structure 1 may be transitioned at least from the initial state to the use state.

In detail, the initial state refers to the conductive structure 1 before the annular rib 121 is deformed. In the initial state, the annular rib 121 extends in a direction away from the first limiting portion 11. A side wall of the annular rib 121 may be perpendicular to the first limiting portion 11, or the side wall of the annular rib 121 may be close to perpendicular to the first limiting portion 11. Optionally, an included angle between the side wall of the annular rib 121 and the first limiting portion 11 ranges from 80° to 100°. As an example, the included angle between the side wall of the annular rib 121 and the first limiting portion 11 is 80°, 82°, 84°, 85°, 86°, 87°, 88°, 89°, 90°, 91°, 92°, 93°, 94°, 95°, 97°, 99°, or 100°. As an example, in the initial state, the annular rib 121 is in a straight cylindrical shape, and the free end 121a extends in an axial direction of the conductive structure 1.

The use state refers to the conductive structure 1 after the annular rib 121 is deformed. In the use state, at least the free end 121a of the annular rib 121 is bent and deformed to turn outward to form the first flange 122. Herein, "turn outward" means that at least a part of the annular rib 121 is offset and unfolded toward an outer side of the annular rib 121. As an example, in the use state, the annular rib 121 is in a trumpet shape. The fixed end 121b is a smaller end of the annular rib 121, and the free end 121a is a larger end of the annular rib 121. The free end 121a extends along a radial direction of the conductive structure 1.

It may be understood that after the conductive structure 1 is transitioned from the initial state to the use state, at least a radial dimension of the free end 121a of the annular rib 121 increases, but an overall axial dimension of the annular rib 121 decreases.

In the use state, the conductive structure 1 is configured to pass through the cover plate 2. As an example, when the conductive structure 1 passes through the cover plate 2, the conductive structure 1 is first kept in the initial state, and the conductive structure 1 passes through the cover plate 2 through a mounting through hole 2a on the cover plate 2, so that at least the free end 121a of the annular rib 121 is exposed outside the mounting through hole 2a. Then pressure is applied to the annular rib 121, so that at least the free end 121a of the annular rib 121 expands outward and forms the first flange 122, and the conductive structure 1 is transitioned into the use state.

When the conductive structure 1 is in the use stage, the first flange 122 and the first limiting portion 11 both abut against the cover plate 2. That is, the first flange 122 abuts against the cover plate 2, and the first limiting portion 11 also abuts against the cover plate 2. However, the first flange 122 and the first limiting portion 11 respectively apply forces to the cover plate 2 from opposite directions, so that the first flange 122 and the first limiting portion 11 jointly clamp the cover plate 2.

The cover plate 2 includes two side surfaces opposite to each other in a thickness direction of the cover plate 2, namely a first surface and a second surface. For ease of subsequent description, the first surface is used as a surface facing the electrode assembly 30, and the second surface is a surface away from the electrode assembly 30.

As an example, in the use state, the conductive structure 1 passes through the cover plate 2 through the mounting through hole 2a on the cover plate 2, the first limiting portion 11 abuts against the first surface, and the first flange 122 abuts against the second surface.

As an example, the mounting through hole 2a on the cover plate 2 is a stepped hole communicated with the first surface and the second surface. The stepped hole includes a first hole section and a second hole section. The first hole section is communicated with the first surface. The second hole section is communicated with the second surface. An aperture of the first hole section is greater than an aperture of the second hole section. An inner surface of the first hole section and an inner surface of the second hole section are connected by a first step surface. In the use state, the conductive structure 1 passes through the cover plate 2 through the mounting through hole 2a on the cover plate 2, the first limiting portion 11 abuts against the first step surface, an end surface of the first limiting portion 11 is flush with the first surface, and the first flange 122 abuts against the second surface.

As an example, the mounting through hole 2a on the cover plate 2 is a variable-diameter hole communicated with the first surface and the second surface. The variable-diameter hole includes an upper hole section, a middle hole section, and a lower hole section distributed in sequence. The upper hole section is communicated with the first surface. The lower hole section is communicated with the second surface. An aperture of the upper hole section is equivalent to an aperture of the lower hole section, but is greater than an aperture of the middle hole section. An inner surface of the upper hole section and an inner surface of the middle hole section are connected by a second step surface. The inner surface of the middle hole section and an inner surface of the lower hole section are connected by a third step surface. In the use state, the conductive structure 1 passes through the cover plate 2 through the mounting through hole 2a on the cover plate 2, the first limiting portion 11 is used as the second step surface, and the first flange 122 is used as the third step surface.

In addition, in the use state, the conductive structure 1 is further configured to be connected to the tab 301. The first limiting portion 11 may be connected to the tab 301, or the second limiting portion 12 may be connected to the tab 301. As an example, the first flange 122 is connected to the tab 301.

In addition, in the initial state, the free end 121a of the annular rib 121 is formed with a first groove 1211. Specifically, a part of the free end 121a is recessed in a direction close to the first limiting portion 11 to form the first groove 1211. In this way, the first groove 1211 is also located on the free end 121a. A notch of the first groove 1211 faces the direction away from the first limiting portion 11. The first groove 1211 is communicated with an inner side and an outer side of the annular rib 121. One or more first grooves 1211 on the free end 121a may be provided. When a plurality of first grooves 1211 are provided, the plurality of first grooves 1211 are arranged at intervals. As an example, all the first grooves 1211 are arranged at equal intervals.

Therefore, when the conductive structure 1 provided by the embodiments of the present disclosure is used, pressure is applied to the annular rib 121, so that at least the free end 121a of the annular rib 121 is turned outward to form a first flange 122. Then the first flange 122 and the first limiting portion 11 are used to jointly clamp the cover plate 2, so that the conductive structure 1 and the cover plate 2 are assembled together. This method is not only simple in process, but also low in operation difficulty. In addition, in the initial state, the free end 121a of the annular rib 121 is formed with the first groove 1211, and the first groove 1211 serves as a notch on the free end 121a of the annular rib 121 and is formed as a weak strength region of the annular rib 121. In this way, when pressure is applied to the annular rib 121, the free end 121a of the annular rib 121 is easier to expand outward by the first groove 1211, so that the annular rib 121 is guided to at least partially expand to form the first flange 122, thereby reducing the difficulty of forming the first flange 122, and further improving an efficiency of assembling the conductive structure 1 and the cover plate 2 together.

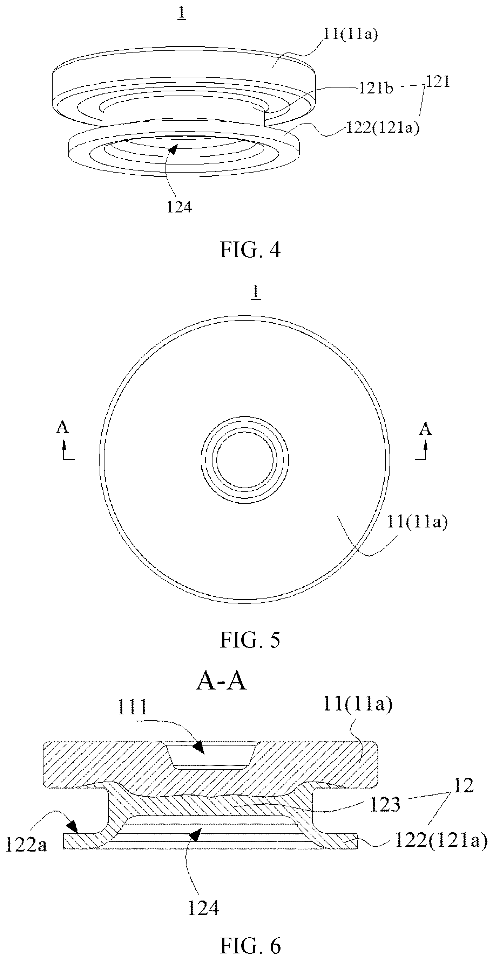

In some embodiments, referring to FIG. 4, the first limiting portion 11 is a terminal pressing block. The second limiting portion 12 is a pole. The terminal pressing block and the pole are integrally provided. That is, the conductive structure 1 is an integrated structure of terminal pressing block-pole. Such an arrangement may not only reduce the number of parts, but also reduce processing steps, thereby improving the efficiency of assembling the conductive structure 1 and the cover plate 2 together. As an example, when the conductive structure 1 is in the use state, the first limiting portion 11 abuts against the second surface, and the first flange 122 abuts against the first surface. The first limiting portion 11 and the first flange 122 jointly clamp the cover plate 2. The first flange 122 is connected to the tab 301.

In some embodiments, the first limiting portion 11 is a current collector. The second limiting portion 12 is the pole. The current collector and the pole are integrally provided. That is, the conductive structure 1 is an integrated structure of current collector-pole. Such an arrangement may also reduce the number of parts and processing steps, thereby improving the efficiency of assembling the conductive structure 1 and the cover plate 2 together. As an example, when the conductive structure 1 is in the use state, the first limiting portion 11 abuts against the first surface, the first flange 122 abuts against the terminal pressing block located on the second surface. The first limiting portion 11 and the first flange 122 jointly clamp the terminal pressing block and the cover plate 2. The first limiting portion 11 is directly connected to the tab 301.

In some embodiments, the conductive structure 1 is the pole. In an example, when the conductive structure 1 is in the use state, the first flange 122 abuts against the first surface, the first flange 122 is connected to the tab 301, and the first limiting portion 11 abuts against the terminal pressing block located on the second surface. The first flange 122 and the first limiting portion 11 jointly clamp the terminal pressing block and the cover plate 2. In another example, when the conductive structure 1 is in the use state, the first flange 122 abuts against the terminal pressing block located on the second surface, and the first limiting portion 11 abuts against the first surface. The first flange 122 and the first limiting portion 11 jointly clamp the terminal pressing block and the cover plate 2. The first limiting portion 11 is connected to the tab 301.

In some embodiments, in the initial state, the first limiting portion 11 includes a limiting block 11a protruding from the annular rib 121 along a radial direction of the annular rib 121. That is, in the initial state, a radial dimension of the limiting block 11a is greater than the radial dimension of the annular rib 121, so that in the initial state, the annular rib 121 easily passes through the mounting through hole 2a on the cover plate 2, and the limiting block 11a is easily abutted by an edge of the mounting through hole 2a, thereby abutting against the cover plate 2. Meanwhile, the limiting block 11a may further seal the mounting through hole 2a to a certain extent. Certainly, the limiting block 11a may also improve a strength of the conductive structure 1 to a certain extent, thereby improving the reliability of the connection between the conductive structure 1 and the cover plate 2. In a case where the conductive structure 1 is a metal member, an arrangement of the limiting block 11a facilitates increasing the amount of metal in the conductive structure 1, thereby improving the overcurrent capability of the conductive structure 1. As an example, in the use state, a cross section obtained by cutting the conductive structure 1 in an axial direction presents a "π" shape.

In some embodiments, the first limiting portion 11 and the second limiting portion 12 are the same structure arranged back-to-back, i.e., the first limiting portion 11 also includes the bendable and deformable annular rib 121. For ease of differentiation, the annular rib 121 included in the second limiting portion 12 is referred to as a first annular rib, and the annular rib 121 included in the first limiting portion 11 is referred to as a second annular rib. As an example, the conductive structure 1 is the pole. When the conductive structure 1 is in the use state, the first annular rib is turned outward to form the first flange abutting against the terminal pressing block located on the second surface. The second annular rib is turned outward to form the second flange abutting against the first surface. The first flange and the second flange jointly clamp the terminal pressing block and the cover plate 2. The second flange is connected to the tab 301.

In some embodiments, in the initial state, along an axial direction of the annular rib 121, an orthographic projection of the annular rib 121 is in a circular ring shape. In this way, the annular rib 121 has no edge, so that the annular rib 121 is easier to bend and deform, and the difficulty of forming the first flange 122 is reduced. Certainly, in other embodiments, the orthographic projection of the annular rib 121 may also be square, trapezoidal, triangular, hemispherical, or even special-shaped.

In some embodiments, in the initial state, a wall thickness of the annular rib 121 ranges from 0.4 mm to 1.5 mm. Taking the conductive structure 1 as a metal member for illustration, in the initial state, the greater the wall thickness of the annular rib 121 is, the greater the difficulty of the annular rib 121 being bent and deformed. The smaller the wall thickness of the annular rib 121 is, the lower a mechanical strength of the annular rib 121 is. After the annular rib 121 is turned outward to form the first flange 122, a wall thickness of the first flange 122 is generally less than a wall thickness of the annular rib 121, so that a mechanical strength of the first flange 122 will also decrease. Thus, in the use state, the first flange 122 is easily deformed and the reliability of the connection between the conductive structure 1 and the change is decreased. The wall thickness of the annular rib 121 in the initial state is provided to range from 0.4 mm to 1.5 mm, the annular rib 121 may be easily turned outward to form the first flange 122 within this thickness range, and the obtained first flange 122 has better strength and is not easily deformed. As an example, the wall thickness of the annular rib 121 is 0.4 mm, 0.5 mm, 0.6 mm, 0.7 mm, 0.8 mm, 0.9 mm, 1.0 mm, 1.1 mm, 1.2 mm, 1.3 mm, 1.4 mm, or 1.5 mm.

In some embodiments, referring to FIGs. 3 and 6, the second limiting portion 12 further includes an intermediate layer 123. The intermediate layer 123 is located between the first limiting portion 11 and the annular rib 121. The intermediate layer 123 and the annular rib 121 are integrally formed. The intermediate layer 123 and the annular rib 121 enclose a second groove 124. That is, the fixed end 121b of the annular rib 121 is directly connected to the intermediate layer 123. The intermediate layer 123 closes an opening on the annular rib 121 corresponding to the fixed end 121b, thereby defining the second groove 124 together with the annular rib 121. For the second groove 124, the annular rib 121 is formed as a side wall, and the intermediate layer 123 is formed as a bottom wall.

The intermediate layer 123 is provided, so that the second limiting portion 12 is connected to the first limiting portion 11 through the intermediate layer 123, thereby increasing a bonding area between the second limiting portion 12 and the first limiting portion 11, improving a connection strength between the second limiting portion 12 and the first limiting portion 11, and ensuring the structural stability of the conductive structure 1. Meanwhile, the intermediate layer 123 and the annular rib 121 are designed to be integrally formed, which may improve the reliability of the connection between the intermediate layer 123 and the annular rib 121, and reduce the risk of cracking or falling off of the annular rib 121 during turning outward. The second groove 124 is formed, which may reduce the difficulty of forming the first flange 122.

In addition, when the first limiting portion 11 and the second limiting portion 12 are the same structure arranged back-to-back, the intermediate layer 123 may block the mounting through hole 2a on the cover plate 2.

In some embodiments, referring to FIG. 3, in the initial state, the connection between the intermediate layer 123 and the annular rib 121 is formed with a rounded corner 1241 in the second groove 124. A radius of the rounded corner 1241 is greater than or equal to 0.2 mm. The rounded corner 1241 is formed, which may enhance a strength of the connection between the intermediate layer 123 and the annular rib 121, thereby reducing the risk of cracking or falling off of the annular rib 121 during turning outward. As an example, the radius of the rounded corner 1241 is 0.2 mm, 0.25 mm, 0.3 mm, 0.35 mm, 0.4 mm, 0.45 mm, 0.5 mm, 0.6 mm, 0.7 mm, 0.8 mm, or 1 mm.

In some embodiments, referring to FIG. 6, a side surface of the first limiting portion 11 away from the second limiting portion 12 is recessed inward to form a third groove 111. The third groove 111 corresponds to the second groove 124. The third groove 111 is provided, so that a weight of the conductive structure 1 may be reduced, thereby reducing the cost of the conductive structure 1. As an example, a cross-sectional shape of the third groove 111 obtained by cutting the conductive structure 1 along the axial direction may be square, trapezoidal, triangular, hemispherical, etc., which is not limited herein.

In some embodiments, the first limiting portion 11 is a first-metal structure, and the second limiting portion 12 is a second-metal structure. Herein, the first metal and the second metal are different metals, and in the conductive structure 1, a material of the first limiting portion 11 is different from a material of the second limiting portion 12, so that the conductive structure 1 is formed as a composite conductive structure, which may not only reduce the production cost of the conductive structure 1, but also reduce the difficulty of connecting the conductive structure 1 to the tab 301 and the external circuit structure. For example, when the second limiting portion 12 is configured to be welded to the tab 301 by using a connecting sheet (not shown in the figure), the material of the second limiting portion 12 may be the same as a material of the connecting sheet, so that the difficulty of the first limiting portion 11 to be connected to the external circuit is reduced. The first limiting portion 11 may be designed according to a material of a structure of the external circuit. The conductive structure 1 may be a structure configured to be connected to a positive tab, or may be a structure configured to be connected to a negative tab. As an example, the first metal includes one of copper and aluminum, and the second metal includes the other of copper and aluminum.

In some embodiments, a bonding interface between the first-metal structure and the second-metal structure includes an uneven microstructure. Herein the uneven microstructure refers to the concave-convex fit between a surface of the first-metal structure and a surface of the second-metal structure at a microscopic level. Optionally, the conductive structure 1 is a cold heading molded member. As an example, the first metal is aluminum, and the second metal is a copper layer. The conductive structure 1 is formed from a copper-aluminum composite plate by cold heading machining. Since metals have ductility, during the cold heading process, under the action of pressure, the first metal in the first-metal structure and the second metal in the second-metal structure deform and invade each other, so that the bonding interface between the first-metal structure and the second-metal structure is formed into a uneven wavy surface at the microscopic level, thereby increasing a bonding area between the first-metal structure and the second-metal structure, and improving the bonding strength. Optionally, a transition layer (not shown in the figures) is further formed between the first-metal structure and the second-metal structure. The transition layer includes at least a compound, and the compound includes the first metal and the second metal.

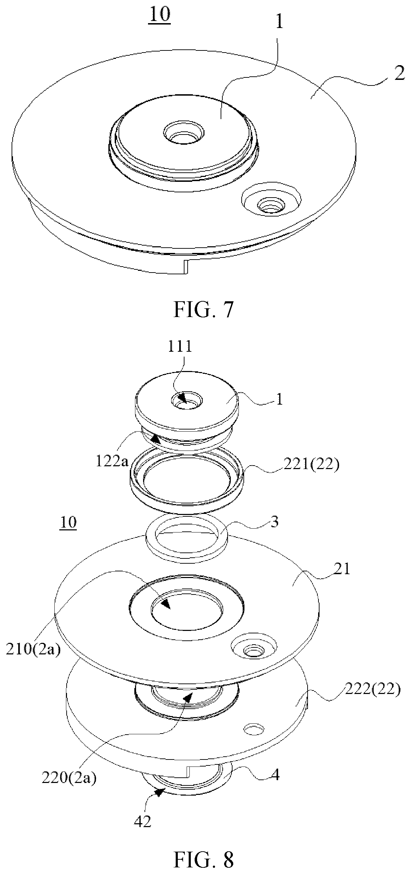

According to a second aspect, referring to FIG. 7, the embodiments of the present disclosure further provide a cover plate assembly 10. The cover plate assembly 10 is configured to fit with a casing of a battery cell to form an enclosed accommodating cavity. The accommodating cavity is configured to accommodate the electrode assembly of the battery cell.

Specifically, referring to FIGs. 7 to 13, the cover plate assembly 10 includes a cover plate 2 and the above-mentioned conductive structure 1. The cover plate 2 is provided with a mounting through hole 2a. The mounting through hole 2a penetrates through the cover plate 2 in a thickness direction of the cover plate 2. The conductive structure 1 is in a use stage, the conductive structure 1 passes through the mounting through hole 2a, the first flange 122 and the first limiting portion 11 respectively abut against the cover plate 2, and the cover plate 2 is clamped between the first flange 122 and the first limiting portion 11.

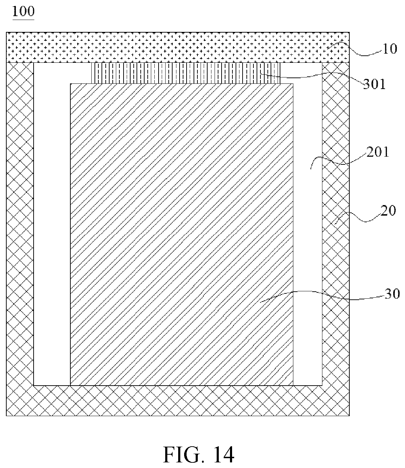

In detail, along the thickness direction of the cover plate 2, the cover plate 2 includes a first surface and a second surface opposite to each other. Referring to FIG. 14, when the cover plate assembly 10 is mounted on the casing 20 of the battery cell 100, the first surface is a surface of the cover plate 2 on a side close to the casing 20, and the first surface is configured to face the electrode assembly 30 in the casing 20. The second surface is a surface of the cover plate 2 on a side away from the casing 20, and the second surface is configured to face away from the electrode assembly 30 in the casing 20.

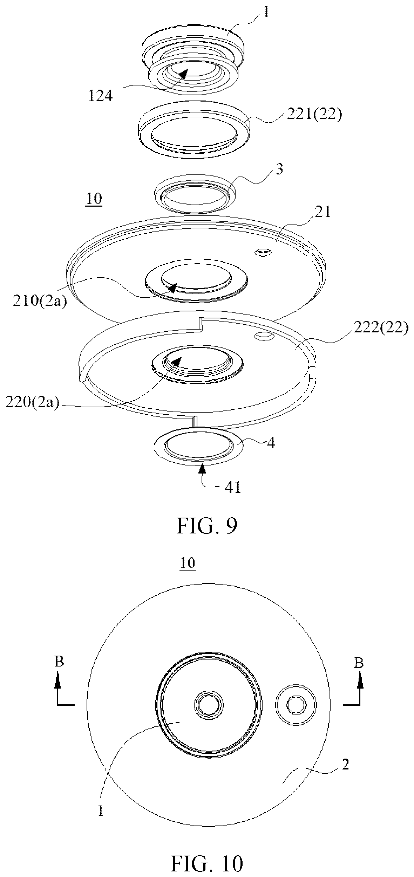

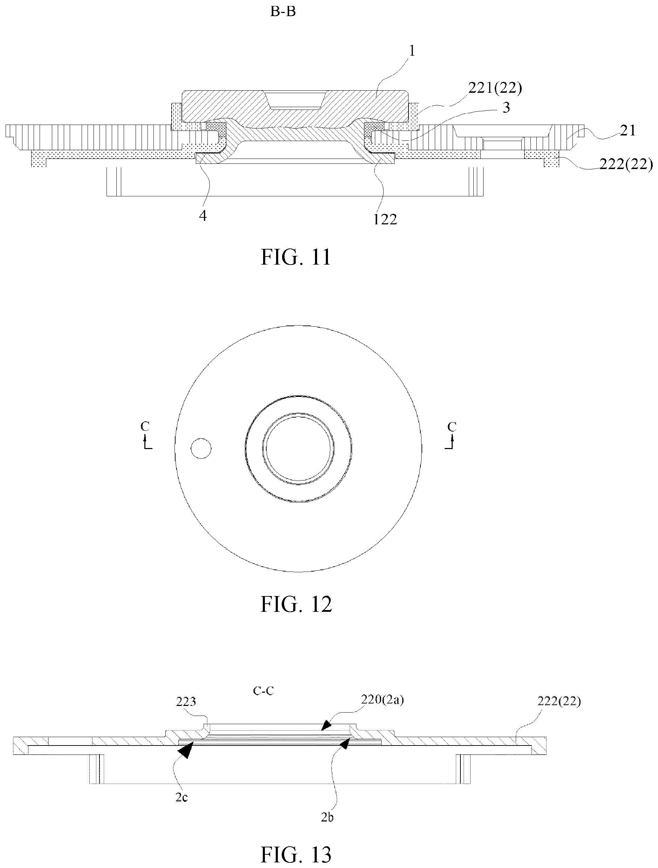

In some embodiments, referring to FIGs. 9 and 13, the cover plate 2 is formed with an arc-shaped transition surface 2b. The arc-shaped transition surface 2b bends and extends from one side surface of the cover plate 2 into the mounting through hole 2a. The first flange 122 includes an outer surface 122a close to the cover plate 2. The arc-shaped transition surface 2b matches the outer surface 122a of the first flange 122. The cover plate 2 is provided with the arc-shaped transition surface 2b, so that the arc-shaped transition surface 2b may guide the annular rib 121 to turn outward to form the first flange 122, which is beneficial to the completion of the outward turning action. Furthermore, the arc-shaped transition surface 2b may also reduce the risk of pressing the cover plate 2 during the formation of the first flange 122.

In some embodiments, referring to FIGs. 10 to 13, the cover plate 2 is formed with a fourth groove 2c. Specifically, one side surface of the cover plate 2 is partially recessed inward to form the fourth groove 2c. The fourth groove 2c is provided surrounding the mounting through hole 2a. It may be understood that, the fourth groove 2c is communicated with the mounting through hole 2a. The arc-shaped transition surface 2b is connected to a surface of a bottom wall of the fourth groove 2c. The first flange 122 is accommodated in the fourth groove 2c. In this way, when the annular rib 121 is turned outward to form the first flange 122, the arc-shaped transition surface 2b may guide the annular rib 121 to deform into the first flange 122 and be accommodated in the fourth groove 2c, and a height of the first flange 122 protruding from the surface of the cover plate 2 may be reduced, so that an overall structure of the cover plate assembly 10 is more compact, thereby improving a utilization rate of an internal space of the cell. Optionally, the free end of the first flange 122 abuts against a side wall of the fourth groove 2c.

In some embodiments, referring to FIGs. 8 and 9, the cover plate 2 includes a cover plate body 21 and insulating members 22. The insulating members 22 are respectively located on two opposite sides of the cover plate body 21. It may be understood that two insulating members 22 are provided, and the cover plate body 21 is located between the two insulating members 22. The cover plate 2 is provided with the mounting through hole 2a. The mounting through hole 2a penetrates through the cover plate body 21 and the insulating members 22. Specifically, the mounting through hole 2a includes a first through hole 210 and a second through hole 220. The first through hole 210 is provided on the cover plate body 21. The second through hole 220 is provided on the insulating member 22. The first through hole 210 corresponds to the second through hole 220. A surface of at least one of the insulating members 22 on a side away from the cover plate body 21 is provided with the arc-shaped transition surface 2b and the fourth groove 2c. The arc-shaped transition surface 2b at least partially extends into the second through hole 220. Since the arc-shaped transition surface 2b is connected to the surface of the bottom wall of the fourth groove 2c, it may be understood that the arc-shaped transition surface 2b and the fourth groove 2c are formed on a same one of the insulating members 22.

For ease of differentiation, the insulating members 22 respectively arranged on the two opposite sides of the cover plate body 21 are referred to as a first insulating member 221 and a second insulating member 222. As an example, the cover plate body 21 is a smooth aluminum sheet. The first insulating member 221 and the second insulating member 222 are both plastic members. The arc-shaped transition surface 2b and the fourth groove 2c may be formed on at least one of the first insulating member 221 and the second insulating member 222. As an example, the arc-shaped transition surface 2b and the fourth groove 2c are formed on the second insulating member 222. As an example, the arc-shaped transition surface 2b and the fourth groove 2c are formed on the first insulating member 221. As an example, the first insulating member 221 and the second insulating member 222 are both formed with the arc-shaped transition surface 2b and the fourth groove 2c. Specifically, the arc-shaped transition surface 2b and the fourth groove 2c may be disposed according to a structure of the conductive structure 1 and an installation manner of the conductive structure 1 on the cover plate 2.

In some embodiments, the fourth groove 2c may be formed by partially thinning the insulating members 22.

In some embodiments, referring to FIG. 13, the fourth groove 2c is formed by recessing a part of one of the insulating members 22 surrounding the second through hole 220 toward one side, specifically a side where the cover plate body 21 is located. Compared with the way of thinning the insulating member 22 to form the fourth groove 2c, this way may ensure that an overall strength of each insulating member 22 is consistent, and it is not easy to form a weak strength region due to the partial thickness reduction of the insulating member 22.

In some embodiments, referring to FIGs. 10 to 13, the insulating member 22 is further formed with a second flange 223. The second flange 223 surrounds the second through hole 220. The second flange 223 further extends toward the cover plate body 21. The arc-shaped transition surface 2b is located on the second flange 223. The second flange 223 extends into the first through hole 210, and the second flange 223 matches the first through hole 210. In this way, the first through hole 210 may be used to limit the second flange 223, thereby improving the reliability of the connection between the insulating member 22 and the cover plate body 21. It may be understood that, in this case, the first through hole 210 at least partially overlaps the second through hole 220.

In some embodiments, referring to FIGs. 8 and 9, the cover plate assembly 10 further includes a sealing member 3. The sealing member 3 is disposed in the mounting through hole 2a and located between the cover plate 2 and the conductive structure 1, so as to seal a gap between the conductive structure 1 and the mounting through hole 2a, thereby preventing the electrolyte from leaking from the gap. As an example, the sealing member 3 is a sealing ring. The sealing ring is made of silica gel or rubber.

In an embodiment, referring to FIGs. 10 to 13, the sealing member 3 at least partially extends into the first through hole 210, and the sealing member 3 is located between the cover plate body 21 and the conductive structure 1. A free end of the second flange 223 abuts against the sealing member 3. Generally, a modulus of the sealing member 3 is relatively small, so that when the annular rib 121 is turned outward to form the first flange 122, the sealing member 3 may play a certain buffering role. In combination with the arc-shaped transition surface 2b on the second flange 223, the arc-shaped transition surface 2b and the sealing member 3 cooperates with each other to reduce a risk of stress concentration on the annular rib 121, thereby reducing the risk of fracture of the annular rib 121.

In some embodiments, referring to FIGs. 8 and 9, the cover plate assembly 10 further includes an auxiliary pressing sheet 4. The auxiliary pressing sheet 4 is located between the cover plate 2 and the first flange 122. The auxiliary pressing sheet 4 includes a front surface 41 and a back surface 42 opposite to each other. The front surface 41 matches the outer surface. The back surface 42 matches the arc-shaped transition surface 2b. The auxiliary pressing sheet 4 is provided, so as to promote the annular rib 121 to be turned outward to form the first flange 122, which is beneficial to the completion of the outward turning action and reduces the risk of pressure damage to the cover plate 2 during the formation of the first flange 122. A material of the auxiliary pressing sheet 4 may be metal or non-metal. Generally, the auxiliary pressing sheet 4 has good toughness.

As an example, processes of assembling the cover plate assembly 10 includes steps as follows.

The sealing member 3 is sleeved on the conductive structure 1, and the conductive structure 1 is in the initial state.

The conductive structure 1 sequentially passes through the first insulating member 221, the cover plate body 21, and the second insulating member 222.

Pressure is applied to the conductive structure 1, so that at least the free end 121a of the annular rib 121 is turned outward to form the first flange 122.

In some embodiments, the cover plate assembly 10 further includes an explosion-proof valve (not shown in the figures). The explosion-proof valve is disposed on the cover plate 2.

In some embodiments, the cover plate 10 is further provided with a liquid injection hole (not shown in the figures) and a sealing structure (not shown in the figures) for sealing the liquid injection hole.

According to a third aspect, referring to FIG. 14, the embodiments of the present disclosure further provide a battery cell 100. The battery cell 100 is also referred to as a cell. The battery cell 100 is a basic unit for implementing conversion between chemical energy and electrical energy.

Specifically, referring to FIG. 14, the battery cell 100 includes a casing 20, an electrode assembly 30, and the aforementioned cover plate assembly 10. The casing 20 includes an accommodating cavity 201. The electrode assembly 30 is disposed in the accommodating cavity 201. The cover plate assembly 10 is connected to the casing 20 and closes an opening of the accommodating cavity 201. The electrode assembly 30 includes a tab 301. The conductive structure 1 is connected to the tab 301.

Specifically, the electrode assembly 30 further includes electrode sheets and a separator. The tab 301 is connected to the electrode sheets. The electrode sheets include a positive sheet and a negative sheet. The separator is located between the positive sheet and the negative sheet. It may be understood that the tab 301 also includes a positive tab and a negative tab. The positive tab is connected to the positive sheet. The negative tab is connected to the negative sheet.

In addition, the accommodating cavity 201 is further loaded with an electrolyte, and the electrode assembly 30 is infiltrated in the electrolyte.

The embodiments of the present disclosure have been described in detail above, and the principles and embodiments of the present disclosure have been described herein by applying specific examples, and the description of the above embodiments is only for helping to understand the technical solutions of the present disclosure and the core ideas thereof. In addition, for those skilled in the art, there will be changes in the specific implementations and the scope of application based on the ideas of the present disclosure. In summary, the content of the description should not be understood as limiting the present disclosure.

## Claims

1. A conductive structure (1), **characterized in that** the conductive structure (1) comprises a first limiting portion (11) and a second limiting portion (12) disposed on one side of the first limiting portion (11), wherein the second limiting portion (12) comprises a bendable and deformable annular rib (121), and a free end (121a) of the annular rib (121) is partially recessed inward to form a first groove (1211); and
wherein in a use state, the conductive structure (1) is configured to pass through a cover plate (2) and be connected to a tab (301), and at least the free end (121a) of the annular rib (121) is turned outward to form a first flange (122), and the first flange (122) and the first limiting portion (11) both abut against the cover plate (2) and jointly clamp the cover plate (2).

2. The conductive structure (1) according to claim 1, **characterized in that** in an initial state, a wall thickness of the annular rib (121) ranges from 0.4 mm to 1.5 mm, and/or the first limiting portion (11) comprises a limiting block (11a) protruding from the annular rib (121) along a radial direction of the annular rib (121).

3. The conductive structure (1) according to claim 1, **characterized in that** the second limiting portion (12) further comprises an intermediate layer (123) located between the first limiting portion (11) and the annular rib (121), and the intermediate layer (123) and the annular rib (121) are integrally formed and enclose a second groove (124).

4. The conductive structure (1) according to claim 3, **characterized in that** in an initial state, a connection between the intermediate layer (123) and the annular rib (121) is formed with a rounded corner (1241) in the second groove (124), and a radius of the rounded corner (1241) is greater than or equal to 0.2 mm.

5. The conductive structure (1) according to claim 3, **characterized in that** a surface of the first limiting portion (11) on a side away from the second limiting portion (12) is recessed inward to form a third groove (111), and the third groove (111) corresponds to the second groove (124).

6. The conductive structure (1) according to any one of claims 1 to 5, **characterized in that** the first limiting portion (11) is a first-metal structure, the second limiting portion (12) is a second-metal structure, and a bonding interface between the first-metal structure and the second-metal structure comprises an uneven microstructure.

7. The conductive structure (1) according to any one of claims 1 to 5, **characterized in that** the first limiting portion (11) is a terminal pressing block, the second limiting portion (12) is a pole, and the terminal pressing block and the pole are integrally provided; or wherein the first limiting portion (11) is a current collector, the second limiting portion (12) is a pole, and the current collector and the pole are integrally provided; or wherein the conductive structure (1) is a pole.

8. A cover plate assembly (10), **characterized in that** the cover plate assembly (10) comprises a cover plate (2) and the conductive structure (1) according to any one of claims 1 to 7, wherein the cover plate (2) is provided with a mounting through hole (2a) penetrating through the cover plate (2) along a thickness direction of the cover plate (2); and
wherein the conductive structure (1) is in the use state, the conductive structure (1) passes through the mounting through hole (2a), the first flange (122) and the first limiting portion (11) abut against the cover plate (2), respectively, and the cover plate (2) is clamped between the first limiting portion (11) and the first flange (122).

9. The cover plate assembly (10) according to claim 8, **characterized in that** the cover plate (2) is provided with an arc-shaped transition surface (2b), the arc-shaped transition surface (2b) bends and extends from a side surface of the cover plate (2) into the mounting through hole (2a), the first flange (122) comprises an outer surface (122a) close to the cover plate (2), and the arc-shaped transition surface (2b) matches the outer surface (122a).

10. The cover plate assembly (10) according to claim 9, **characterized in that** a side surface of the cover plate (2) is partially recessed inward to form a fourth groove (2c), the fourth groove (2c) is provided surrounding the mounting through hole (2a), a surface of a bottom wall of the fourth groove (2c) is connected to the arc-shaped transition surface (2b), and the first flange (122) is accommodated in the fourth groove (2c).

11. The cover plate assembly (10) according to claim 10, **characterized in that** the cover plate (2) comprises a cover plate body (21) and insulating members (22) respectively located on two opposite sides of the cover plate body (21), the mounting through hole (2a) comprises a first through hole (210) provided on the cover plate body (21) and a second through hole (220) provided on each of the insulating members (22), and the first through hole (210) corresponds to the second through hole (220); and wherein a surface of at least one of the insulating members (22) on a side away from the cover plate body (21) is formed with the arc-shaped transition surface (2b) and the fourth groove (2c), and the arc-shaped transition surface (2b) at least partially extends into the second through hole (220).

12. The cover plate assembly (10) according to claim 11, **characterized in that** each of the insulating members (22) is further formed with a second flange (223) surrounding the second through hole (220) and extending toward the cover plate body (21), the arc-shaped transition surface (2b) is located on the second flange (223), the second flange (223) extends into the first through hole (210), and the second flange (223) matches the first through hole (210).

13. The cover plate assembly (10) according to claim 12, **characterized in that** the cover plate assembly (10) further comprises a sealing member (3), the sealing member (3) at least partially extends into the first through hole (210) and is located between the cover plate body (21) and the conductive structure (1), and a free end (121a) of the second flange (223) abuts against the sealing member (3).

14. The cover plate assembly (10) according to claim 9, **characterized in that** the cover plate assembly (10) further comprises an auxiliary pressing sheet (4), the auxiliary pressing sheet (4) is located between the cover plate (2) and the first flange (122), the auxiliary pressing sheet (4) comprises a front surface (41) and a back surface (42) opposite to each other, the front surface (41) matches the outer surface (122a), and the back surface (42) matches the arc-shaped transition surface (2b).

15. A battery cell (100), **characterized in that** the battery cell (100) comprises:
a casing (20) comprising an accommodating cavity (201);
an electrode assembly (30) disposed in the accommodating cavity (201), wherein the electrode assembly (30) comprises a tab (301); and
the cover plate assembly (10) according to any one of claims 8 to 14, wherein the cover plate assembly (10) is connected to the casing (20) and closes an opening of the accommodating cavity (201), and the conductive structure (1) is connected to the tab (301).
